# EUROPEAN PATENT APPLICATION

(11) **EP 3 505 835 A1**
(43) Date of publication of application: **03.07.2019**
(21) Application number: 18214923.7
(22) Date of filing: 20.12.2018
(51) Int. Cl.: F24F 3/044, F24F 11/77, F24F 11/74, F24F 11/75, F24F 110/10, F24F 140/40

(54) **AIR CONDITIONER AND METHOD FOR CONTROLLING THE SAME**

(30) Priority: 28.12.2017 JP 2017254120
(71) Applicant: MITSUBISHI HEAVY INDUSTRIES THERMAL SYSTEMS, LTD., 108-8215 Tokyo (JP)
(72) Inventor: Yamato, Hironori, Tokyo, 108-8215 (JP); Yamada, Hiroyuki, Tokyo, 108-8215 (JP)
(74) Representative: Henkel, Breuer & Partner

(57) **Abstract**

Provided is an air conditioner that allows to maintain a flow speed of air-conditioned air blown into each air-conditioning area with simple control. The air conditioner includes: an indoor unit 3 connected to plural ducts 11 respectively opening to plural air-conditioning areas 5; an indoor fan 12 provided to the indoor unit 3 and sending air-conditioned air toward the plural ducts 11; plural dampers 6 respectively provided to the plural ducts 11 and operative to be opened and closed; and a control unit 4 configured to control the number of revolutions of the indoor fan 12 and opening and closing of the plural dampers 6. The control unit 4 includes a table that sets out the number of revolutions of the indoor fan 12 according to the number of opened dampers 6 and a set level of airflow of the indoor fan 12.

## Description

### [Technical Field]

The present invention relates to an air conditioner including plural ducts respectively opening to plural air-conditioning areas and a method for controlling the air conditioner.

### [Background Art]

There is known a duct type air conditioner that includes plural ducts respectively opening to plural air-conditioning areas. The plural ducts are connected to one indoor unit, and an indoor fan provided to the indoor unit distributes air-conditioned air to each duct (for example, see Patent Literature 1).

Patent Literature 1 discloses adjusting a temperature of each room to a set temperature by controlling a capacity of a capacity-variable compressor according to the total number of air outlets of rooms to which the air-conditioned air is actually supplied.

### [Citation List]

### [Patent Literature]

[PTL 1]
Japanese Unexamined Patent Application, Publication No. 2013-200089

### [Summary of Invention]

### [Technical Problem]

However, controlling a capacity of a compressor as in Patent Literature 1 has a drawback in that it not only requires various sensors but also involves complicated control, which incurs a large cost.

Further, when the total number of air outlets is changed by opening and closing the dampers during operation, a flow speed of air-conditioned air blown from each air outlet changes, which makes airflow unstable. This in turn makes it difficult to maintain a temperature of each air-conditioning area at a set temperature, and may eventually lead to wasteful energy consumption.

The present invention has been made in view of such circumstances, and aims to provide an air conditioner and a method for controlling the air conditioner each of which allows to maintain a flow speed of air-conditioned air blown into each air-conditioning area with simple control.

### [Solution to Problem]

According to an aspect of the present invention, there is provided an air conditioner including: an indoor unit connected to plural ducts respectively opening to plural air-conditioning areas; an indoor fan provided to the indoor unit, the indoor fan sending air-conditioned air toward the plural ducts; plural dampers respectively provided to the plural ducts, the plural dampers being operative to be opened and closed; and a control unit configured to control a number of revolutions of the indoor fan and opening and closing of the plural dampers, wherein the control unit includes a table that sets out the number of revolutions of the indoor fan according to a number of opened dampers and a set level of airflow of the indoor fan.

The control unit includes a table that sets out the number of revolutions of the indoor fan according to the number of opened dampers. This allows to maintain a flow speed of air-conditioned air blown into the air-conditioning area, regardless of pressure loss due to opening and closing of the dampers. Further, the number of revolutions of the indoor fan is set according to a set level of airflow of the indoor fan. This allows for air-conditioning without any complicated control such as capacity control of the compressor.

The airflow of the indoor fan may be selected from two or more, e.g., four, setting levels.

Further, in the air conditioner according to the above aspect of the present invention, each of the plural air-conditioning areas is provided with a switch to open and close a corresponding one of the plural dampers, and the control unit is configured to determine the number of opened dampers according to an opening and closing state of each of the plural dampers made by the switch.

Each air-conditioning area is provided with a switch to open and close the damper. A user can open or close the damper on his/her own choice by operating the switch. The control unit acquires the status of dampers opened or closed by each switch and thereby determines the number of opened dampers. This allows for simple control by setting the appropriate number of revolutions of the indoor fan based on the table, even when the user forcibly opens or closes the damper.

Further, in the air conditioner according to the above aspect of the present invention, each of the plural air-conditioning areas is provided with a temperature sensor to measure a temperature of the each of the plural air-conditioning areas, and the control unit is configured to open and close the plural dampers based on a measured temperature from the temperature sensor and determines the number of opened dampers.

Each air-conditioning area is provided with a temperature sensor to measure a temperature of the air-conditioning area, and the control unit opens and closes the dampers based on the measured temperature from the temperature sensor. Specifically, when the measured temperature from the temperature sensor reaches a set temperature, the control unit closes the opened dampers and turns off the thermostat, and when the measured temperature leaves a predetermined temperature range centered around the set temperature, the control unit opens the closed dampers and turns on the thermostat.

The control unit then determines the number of opened dampers. This allows for simple control by setting the appropriate number of revolutions of the indoor fan based on the table, even when the dampers are opened and closed according to the measured temperature from the temperature sensor.

Further, in the air conditioner according to the above aspect of the present invention, the table includes plural tables according to pressure loss of the plural ducts.

Since an appropriate number of revolutions of the indoor fan varies depending on pressure loss of the duct, plural tables are prepared according to pressure loss of the duct. This ensures the appropriate number of revolutions of the indoor fan.

For example, pressure loss when all dampers are opened is used as the pressure loss of the duct.

Further, in the air conditioner according to the above aspect of the present invention, the air conditioner includes a compressor to compress refrigerant, and the control unit stores a maximum number of revolutions of the compressor for each number of revolutions of the indoor fan set out in the table.

The maximum number of revolutions of the compressor is set according to the number of revolutions of the indoor fan. This prevents an excessive increase in the number of revolutions of the compressor, reducing energy consumption.

According to another aspect of the present invention, there is provided a method for controlling an air-conditioner including: an indoor unit connected to plural ducts respectively opening to plural air-conditioning areas; an indoor fan provided to the indoor unit, the indoor fan sending air-conditioned air toward the plural ducts; and plural dampers respectively provided to the plural ducts, the plural dampers being operative to be opened and closed, the air conditioner controlling a number of revolutions of the indoor fan and opening and closing of the plural dampers, and the method includes controlling the number of revolutions of the indoor fan based on a table that sets out the number of revolutions of the indoor fan according to a number of opened dampers and a set level of airflow of the indoor fan.

### [Advantageous Effects of Invention]

The control unit includes the table that sets out the number of revolutions of the indoor fan according to the number of opened dampers and a set level of airflow of the indoor fan. This allows to maintain a flow speed of air-conditioned air blown into each air-conditioning area without any complicated control.

### [Brief Description of Drawings]

[Fig. 1]

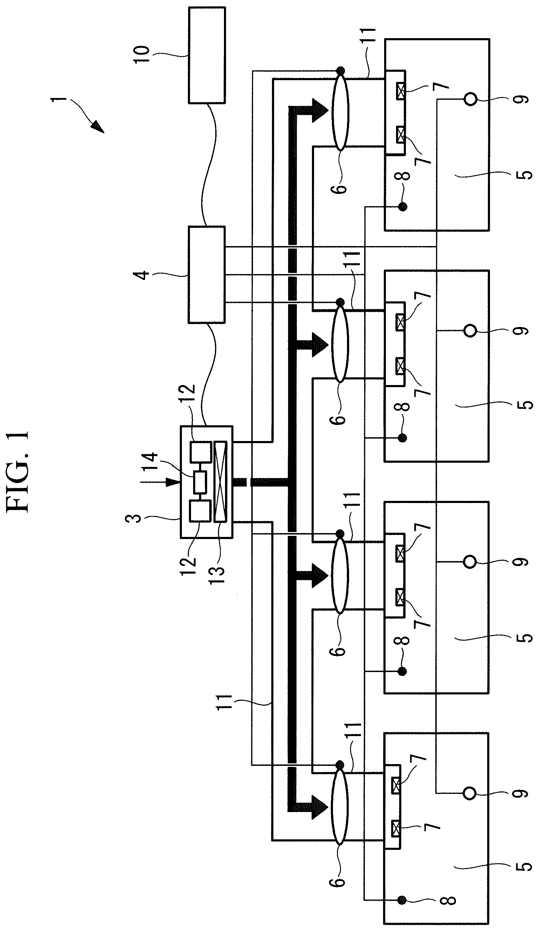

   Fig. 1 is a schematic configuration diagram of an air conditioner according to an embodiment of the present invention.
[Fig. 2A]

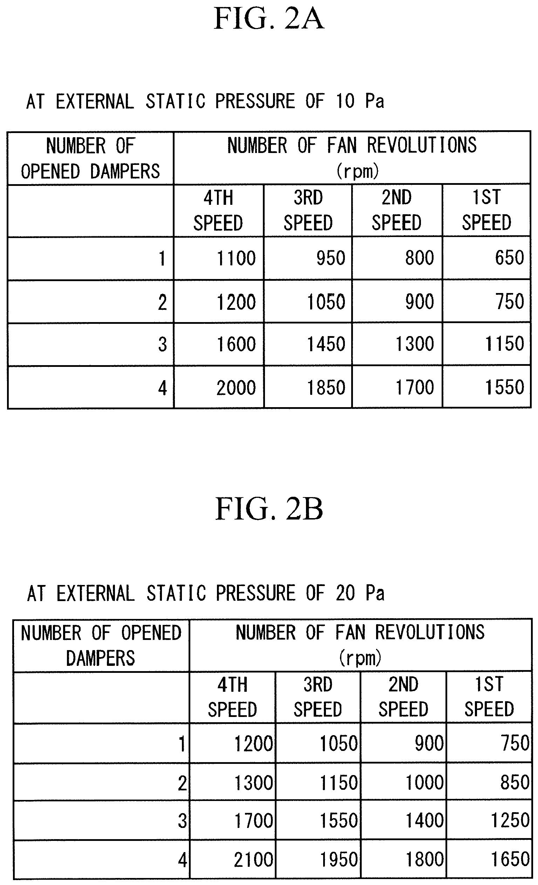

   Fig. 2A is a table showing the numbers of fan revolutions.
[Fig. 2B]
   Fig. 2B is a table showing the numbers of fan revolutions at a different external static pressure from that of Fig. 2A.

### [Description of Embodiments]

An embodiment of the present invention will be explained below with reference to the drawings.

Fig. 1 illustrates a duct type air conditioner 1.

The air conditioner 1 includes an outdoor unit (not shown in the figure) and an indoor unit 3.

The outdoor unit is provided with a compressor and an outdoor heat exchanger (both not shown in the figure). The indoor unit 3 is provided with an indoor heat exchanger 13 and an expansion valve (not shown in the figure). The compressor, the outdoor heat exchanger, the expansion valve and the indoor heat exchanger 13 are connected with a refrigerant circuit in which refrigerant is circulated. The compressor is operative with its number of revolutions varied according to an instruction from a control unit 4.

The indoor unit 3 is provided with indoor fans 12. Each indoor fan 12 is, for example, a centrifugal multiblade fan and driven by a driving motor 14. The number of revolutions of each indoor fan 12, more specifically the number of revolutions of the driving motor 14 is controlled by the control unit 4.

A duct 11 is connected to the indoor unit 3. With an upstream end of the duct 11 connected to one indoor unit 3, the duct 11 is split into plural branch ducts. The branch ducts 11 are respectively connected to plural air-conditioning areas 5. Each duct 11 is provided with an air outlet 7 at its downstream end.

Each duct 11 is provided with a damper 6 to open and close an airflow path. The damper 6 is opened and closed according to an instruction from the control unit 4. Each air-conditioning area 5 is provided with an on-off terminal 8 as a switch to open and close the damper 6. The on-off terminal 8 is connected to the control unit 4 and operable by a user.

Each air-conditioning area 5 is provided with a temperature sensor 9. Output from the temperature sensor 9 is transmitted to the control unit 4.

A remote controller 10, which is for example a wired remote controller, is connected to the control unit 4. Temperature, timer and other settings can be made through the remote controller 10.

The control unit 4 is composed of, for example, a central processing unit (CPU), a random access memory (RAM), a read-only memory (ROM), a computer-readable storage medium and other components. A series of processing to provide various functions is, for example, stored in a storage medium or the like in the form of a program. The CPU loads this program onto the RAM or the like to perform information processing and calculations, whereby various functions are provided. The program may be preinstalled in the ROM or another storage medium, may be provided by being stored in the computer-readable storage medium, or may be distributed via wired or wireless communication means. Examples of the computer-readable storage medium include a magnetic disk, a magnetooptical disk, CD-ROM, DVD-ROM and a semiconductor memory.

A table of the format shown in Fig. 2A is stored in a storage area of the control unit 4. As shown in Fig. 2A, the table sets out the number of revolutions of the indoor fan 12 (hereinafter simply referred to as the "number of fan revolutions") to be instructed by the control unit 4. In the table, the number of fun revolutions (rpm) is set according to the number of opened dampers 6 and a set level of airflow of the indoor fan 12. In Fig. 2A, the airflow of the indoor fan 12 is set from four speeds (four setting levels), though two or more setting levels are only required.

The number of fan revolutions increases as the speed changes from the first speed to the fourth speed. The number of fan revolutions also increases as the number of opened dampers 6 increases. The number of fan revolutions is increased with increase in the number of opened dampers 6, and this allows to maintain a flow speed of air-conditioned air blown from each air outlet 7.

The table shown in Fig. 2A is prepared for each external static pressure, which corresponds to pressure loss of the duct 11. For example, the table shown in Fig. 2A is prepared for an external static pressure of 10 Pa, while the table shown in Fig. 2B is prepared for an external static pressure of 20 Pa. The tables are prepared such that the number of fan revolutions increases with increase in the external static pressure. This allows to ensure desired airflow even when there is a high external static pressure in the installation environment. For example, the pressure loss when all dampers 6 are opened is used as the external static pressure.

Plural tables shown in Figs. 2A and 2B are prepared according to the number of external static pressures of the duct 11 for which the indoor unit 3 is expected to be installed. After the indoor unit 3 is installed, an appropriate table is selected from the plural tables according to the status of external static pressure of the duct 11.

The control unit 4 stores, in its storage area, the maximum number of revolutions of the compressor that is set for each number of fan revolutions in the tables shown in Figs. 2A and 2B. The control unit 4 determines the number of revolutions of the compressor so as not to exceed the maximum number of revolutions.

Then, control of the air conditioner 1 configured as above will be explained.

The control unit 4 regulates the number of revolutions of the compressor, an opening degree of the expansion valve and the number of revolutions of the indoor fan 12 to deliver a temperature set by the remote controller 10. The number of revolutions of the indoor fan 12 is determined based on the tables shown in Figs. 2A and 2B. That is, the number of fan revolutions is determined according to the number of opened dampers 6 grasped by the control unit 4 and the set level of airflow set by the remote controller 10.

When a measured temperature measured by the temperature sensor 9 reaches the set temperature, the control unit 4 instructs the dampers 6 to be closed and turns off the thermostat. When the measured temperature leaves a predetermined temperature range centered around the set temperature, the control unit 4 instructs the closed dampers 6 to be opened and turns on the thermostat. When the number of opened dampers 6 is changed in this way, the control unit 4 changes the number of revolutions of the indoor fan 12 with reference to the table.

When the dampers 6 are opened or closed in response to the user's operation on the on-off terminal 8, the control unit 4 reacquires the number of opened dampers 6 and resets the number of fan revolutions based on the table.

As described above, the present embodiment provides the following functions and effects.

The control unit 4 includes the table that sets out the number of revolutions of the indoor fan 12 according to the number of opened dampers 6. This allows to maintain a flow speed of air-conditioned air blown into the air-conditioning area 5, regardless of pressure loss due to opening and closing of the dampers 6. Further, the number of revolutions of the indoor fan 12 is set according to the set level of airflow of the indoor fan 12. This allows for air-conditioning without any complicated control such as capacity control of the compressor.

Since each air-conditioning area 5 is provided with the on-off terminal 8 to open and close the damper 6, the user can open or close the damper 6 on his/her own choice by operating the on-off terminal 8. The control unit 4 acquires the status of the dampers 6 opened or closed by each on-off terminal 8 and thereby determines the number of opened dampers 6. This allows for simple control by setting the appropriate number of revolutions of the indoor fan 12 based on the table, even when the user forcibly opens or closes the damper 6.

Each air-conditioning area 5 is provided with the temperature sensor 9, and the control unit 4 opens and closes the dampers 6 based on the measured temperature from the temperature sensor 9. Specifically, when the measured temperature from the temperature sensor 9 reaches a set temperature, the control unit 4 closes the opened dampers 6 and turns off the thermostat, and when the measured temperature leaves a predetermined temperature range centered around the set temperature, the control unit 4 opens the closed dampers 6 and turns on the thermostat.

The control unit 4 then determines the number of opened dampers 6. This allows for simple control by setting the appropriate number of revolutions of the indoor fan 12 based on the table, even when the dampers 6 are opened and closed according to the measured temperature from the temperature sensor 9.

Since an appropriate number of revolutions of the indoor fan 12 varies depending on pressure loss (external static pressure) of the duct 11, plural tables are prepared according to pressure loss of the duct 11. This ensures the appropriate number of revolutions of the indoor fan 12.

The maximum number of revolutions of the compressor is set according to the number of revolutions of the indoor fan 12. This prevents an excessive increase in the number of revolutions of the compressor, reducing energy consumption.

### [Reference Signs List]

- 1: Air conditioner
- 3: Indoor unit
- 4: Control unit
- 5: Air-conditioning area
- 6: Damper
- 7: Air outlet
- 8: On-off terminal
- 9: Temperature sensor
- 10: Remote controller
- 11: Duct
- 12: Indoor fan
- 13: Indoor heat exchanger
- 14: Driving motor

## Claims

1. An air conditioner comprising:
an indoor unit connected to a plurality of ducts respectively opening to a plurality of air-conditioning areas;
an indoor fan provided to the indoor unit, the indoor fan sending air-conditioned air toward the plurality of ducts;
a plurality of dampers respectively provided to the plurality of ducts, the plurality of dampers being operative to be opened and closed; and
a control unit configured to control a number of revolutions of the indoor fan and opening and closing of the plurality of dampers, wherein
the control unit includes a table that sets out the number of revolutions of the indoor fan according to a number of opened dampers and a set level of airflow of the indoor fan.

2. The air conditioner according to claim 1, wherein
each of the plurality of air-conditioning areas is provided with a switch to open and close a corresponding one of the plurality of dampers, and
the control unit is configured to determine the number of opened dampers according to an opening and closing state of each of the plurality of dampers made by the switch.

3. The air conditioner according to claim 1 or 2, wherein
each of the plurality of air-conditioning areas is provided with a temperature sensor to measure a temperature of the each of the plurality of air-conditioning areas, and
the control unit is configured to open and close the plurality of dampers based on a measured temperature from the temperature sensor and determines the number of opened dampers.

4. The air conditioner according to any one of claims 1 to 3, wherein
the table comprises a plurality of tables according to pressure loss of the plurality of ducts.

5. The air conditioner according to any one of claims 1 to 4, wherein
the air conditioner comprises a compressor to compress refrigerant, and
the control unit stores a maximum number of revolutions of the compressor for each number of revolutions of the indoor fan set out in the table.

6. A method for controlling an air conditioner including: an indoor unit connected to a plurality of ducts respectively opening to a plurality of air-conditioning areas; an indoor fan provided to the indoor unit, the indoor fan sending air-conditioned air toward the plurality of ducts; and a plurality of dampers respectively provided to the plurality of ducts, the plurality of dampers being operative to be opened and closed, the air conditioner controlling a number of revolutions of the indoor fan and opening and closing of the plurality of dampers, the method comprising:
controlling the number of revolutions of the indoor fan based on a table that sets out the number of revolutions of the indoor fan according to a number of opened dampers and a set level of airflow of the indoor fan.
